# DEMANDE DE BREVET EUROPEEN

(11) **EP 0 899 951 A1**
(43) Date de publication de la demande: **03.03.1999**
(21) Numéro de dépôt: 98202829.2
(22) Date de dépôt: 24.08.1998
(51) Int. Cl.: H04N 7/10

(54) **Dispositif de distribution par câble de signaux de télévision**

(30) Priorité: 27.08.1997 FR 9710689
(71) Demandeur: Koninklijke Philips Electronics N.V., 5621 BA Eindhoven (NL)
(72) Inventeur: Chanteau, Pierre, 75008 Paris (FR)
(74) Mandataire: Caron, Jean

(57) **Abrégé**

Le dispositif comporte plusieurs câbles de descente (1-4) correspondant à des signaux transmis par différents satellites (10-40), et des signaux reçus par transmission terrestre (50,T) sont ajoutés sur chacun de ces câbles. Des signaux de données numériques reçus depuis des satellites différents sont convertis à fréquence plus basse dans des convertisseurs abaisseurs (DC1-DC5) et ajoutés ensemble dans la gamme des signaux terrestres (T).
Pour chaque groupe d'usagers est prévu un convertisseur (94) pour replacer les signaux de données numériques dans leur bande de fréquence habituelle, utilisable par un modem satellite standard (95). Applications : MATV.

## Description

La présente invention concerne un dispositif de tête pour un système de distribution de signaux de télévision desservant une pluralité d'installations d'usager, destiné à alimenter au moins deux câbles de descente, et comportant :
- un ensemble de plusieurs sources distinctes de signaux de télévision transmis par satellite, dites sources satellite, chacun des câbles de descente étant alimenté avec des signaux différents en provenance de sources satellites,
- une source de signaux de télévision transmis par voie terrestre, dite source terrestre,
- et des coupleurs, dits coupleurs de signaux terrestres, pour répéter les signaux de la source terrestre sur chacun des câbles de descente en les ajoutant aux signaux d'une source satellite.

Elle concerne également un dispositif de branchement d'usager, destiné à fournir des signaux à une installation d'usager à partir d'un dispositif de distribution de signaux de télévision selon l'invention, muni de moyens de sélection pour sélectionner un des câbles de descente et y relier l'installation.

Un tel système de distribution, qui trouve une application par exemple dans un immeuble d'habitation comportant une pluralité de logements, est appelé habituellement "MATV".

Un système de distribution, comprenant un dispositif de tête et des dispositifs de branchement d'usager selon l'introduction ci-dessus, est connu de la demande de brevet EP-A-0583843. Selon ce document, plusieurs câbles se partagent l'ensemble des canaux satellite disponibles, et les canaux terrestres sont recopiés sur tous les câbles, de façon qu'on puisse toujours regarder un programme transmis par voie terrestre, quelque soit le câble choisi.

Des canaux de données numériques, utilisables dans des ordinateurs, sont diffusés par certains satellites. Si, dans un même logement, un usager désire regarder une émission de télévision venant d'un certain satellite, c'est-à-dire portée par un certain câble, pendant qu'un autre usager aimerait travailler sur un ordinateur à l'aide de données émises par un autre satellite, c'est-à-dire portée par un autre câble, il y a conflit. L'invention a notamment pour but de remédier à ce conflit.

A cet effet, un dispositif selon l'invention comporte au moins un convertisseurabaisseur pour sélectionner, à partir d'une source satellite, un signal transportant des données numériques, pour abaisser sa fréquence et l'amener dans la gamme des fréquences des signaux transmis par la source terrestre, et au moins un coupleur, dit coupleur de signaux numériques, pour introduire le signal à fréquence abaissée parmi ceux venant de la source terrestre.

Ainsi, puisque les signaux de la source terrestre sont recopiés sur chacun des câbles de descente, les signaux de données qui y sont ajoutés sont disponibles aussi sur tous les câbles.

Dans un mode de réalisation avantageux, le coupleur de signaux numériques est monté en amont des coupleurs de signaux terrestres sur une connexion venant de la source terrestre.

Ainsi un seul coupleur suffit.

Un dispositif de branchement d'usager comporte au moins un convertisseurélévateur pour relever la fréquence des signaux à fréquence abaissée transportant des données numériques et amener leur fréquence dans la gamme des fréquences des signaux transmis par satellite.

Ainsi il est possible d'utiliser un ordinateur équipé d'un modem standard prévu pour les liaisons satellite.

Dans un mode de réalisation avantageux, il comporte en outre un répartiteur pour fournir les signaux, venant du câble sélectionné, à au moins deux installations d'usager distinctes.

Ainsi deux usagers peuvent exploiter chacun une émission différente, en même temps.

Ces aspects de l'invention ainsi que d'autres aspects plus détaillés apparaîtront plus clairement grâce à la description suivante d'un mode de réalisation non limitatif.

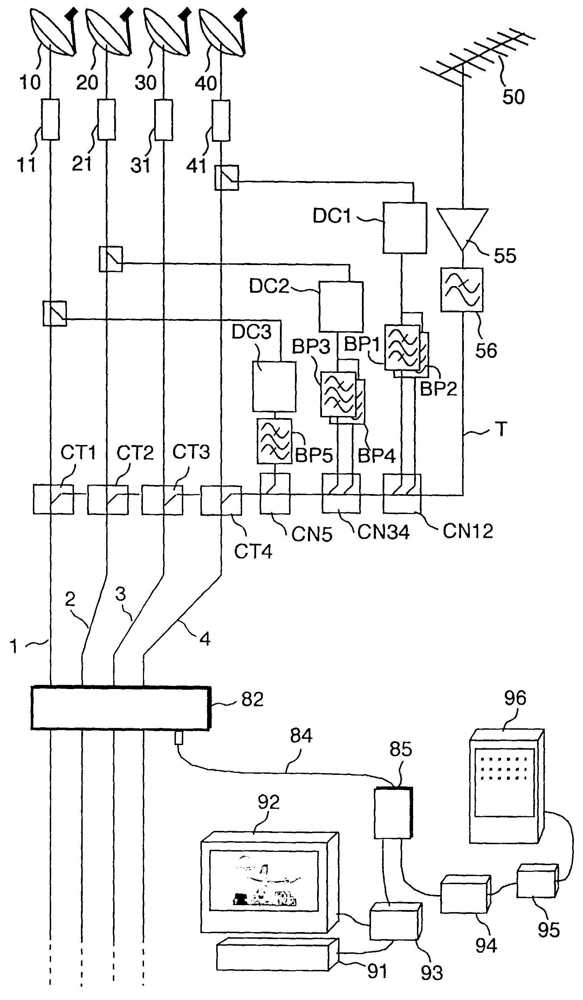

La figure unique représente schématiquement un système de distribution de télévision par câbles, avec un dispositif de tête selon l'invention, des câbles de descente, un dispositif de branchement d'usager selon l'invention, et des installations d'usager.

L'installation de distribution de télévision par câbles représentée par la figure comprend une tête qui est équipée ici, par exemple, de quatre paraboles de réception satellite 10, 20, 30, 40, et d'une antenne 50 pour la réception de signaux reçus à partir stations terrestres. Chacune des paraboles de réception satellite est associée à un bloc amplificateur et changeur de fréquence à faible bruit, appelé en général "LNB", respectivement 11, 21, 31, 41, qui constitue une source de signaux de télévision transmis par satellite. Chacune de ces sources délivre en sortie des signaux dans une gamme de fréquences allant de 950 à 2150 MHz, et ces signaux sont appliqués à un câble de descente différent pour chacune des sources ; il y a ici quatre câbles 1, 2, 3, 4, qui desservent par exemple un immeuble d'habitation dans lequel se trouve une pluralité d'installations d'usager. Le nombre de câbles dépend du nombre de canaux dont la réception est désirée.

Un nombre suffisant de canaux peut éventuellement être fourni par des paraboles en nombre inférieur à quatre, un seul LNB pouvant comporter quatre sorties (bande basse horizontale, bande basse verticale, bande haute horizontale, bande haute verticale). Dans ce cas, c'est ce LNB qui constitue plusieurs sources de signaux satellite.

Les signaux de télévision transmis par voie terrestre, reçus par l'antenne 50, sont amplifiés par un amplificateur 55, couvrant une gamme de fréquences allant de 45 à 862 MHz, et sont envoyés sur un câble T via un filtre passe-bas 56 dont la fréquence de coupure est de l'ordre de 900 MHz. Ces signaux terrestres sont ensuite appliqués à la fois aux quatre câbles 1-4, au moyen de coupleurs CT1, CT2, CT3, CT4, et ces câbles, en plus de signaux reçus par satellite, fournissent chacun l'ensemble des signaux reçus à partir de stations terrestres.

L'installation comprend en outre des convertisseurs abaisseurs DC1 à DC3, permettant le prélèvement, à partir des sources satellite, d'au moins un signal transportant des données numériques, et l'abaissement de sa fréquence pour l'amener dans la gamme des fréquences des signaux reçus par voie terrestre. Ici, par exemple, le convertisseur-abaisseur DC1 reçoit de la source satellite 41 des signaux comprenant entre autres des signaux de données numériques, abaisse leur fréquence par des moyens connus, non représentés, tels qu'un oscillateur associé à un mélangeur, et un canal de données déterminé est sélectionné grâce à un filtre passe-bande BP1. Un autre filtre passe-bande BP2 sélectionne un autre canal de données du même satellite. Le convertisseur DC2 avec les filtres BP3 et BP4 réalise les mêmes fonctions pour deux autres canaux de données, à partir de la source satellite 21. L'ensemble DC3 + BP5 réalise encore la même fonction pour un seul canal de données, à partir de la source satellite 11. La source 31 peut, par exemple, ne pas comporter de canal de données, ou bien ceux qu'elle comporte n'intéressent pas les habitants de l'immeuble.

Les canaux de données sélectionnés par BP1 et BP2, dont la fréquence est abaissée, sont ajoutés dans le câble T grâce à un coupleur de signaux numériques CN12, ceux de BP3 et BP4 par un coupleur CN34, et ceux de BP5 par un coupleur CN5. Comme, en général, il n'y a pas beaucoup d'émetteurs terrestres susceptibles d'être reçus en un point donné, il y a de la place libre dans la gamme 45-862 MHz pour ajouter des canaux de données. Les coupleurs CN sont montés en amont des coupleurs de signaux terrestres CT sur la connexion T venant de la source terrestre. Ces coupleurs pourraient aussi être placés entre l'antenne 50 et l'amplificateur 55, ou encore montés sur les câbles 1-4 mais, dans ce dernier cas, il en faudrait quatre fois plus.

Chaque usager est desservi par un dispositif de branchement, dont un seul est représenté. Ce dispositif comprend un boîtier 82, installé en général dans une cage d'escalier, et qui amène à l'usager des signaux au moyen d'un câble 84 intérieur au logement. Le boitier 82 comprend autant de dérivateurs qu'il y a de câbles, c'est-à-dire ici quatre dérivateurs non représentés, connus par eux-mêmes, pour dériver de chaque câble la pluralité de signaux de ce câble, et des moyens non représentés, également connus, pour connecter l'usager à l'un des quatre câbles 1-4, par exemple un commutateur télécommandé au moyen d'un signal, appelé "DiSEqC", envoyé sur la connexion 84.

A l'autre extrémité du câble 84, un diviseur passif 85, connu par lui-même, permet de fournir à deux installations tous les signaux présents sur le câble. L'une de ces installations comprend par exemple un répartiteur 93, muni de filtres pour fournir à un récepteur-décodeur 91 les signaux reçus par satellite et à un téléviseur 92 les signaux reçus à partir de stations terrestres. Une deuxième installation comprend un ordinateur 96, qui reçoit des données numériques d'un modem 95 adapté aux liaisons satellite, grâce à un convertisseur-élévateur 94 qui, par exemple en utilisant des moyens inverses de ceux du convertisseur DC1, remonte la fréquence des signaux pour les ramener dans la bande satellite, de façon qu'ils puissent être exploités par le modem 95.

On pourrait aussi prévoir deux sorties au boîtier 82, avec pour chacune un commutateur permettant de sélectionner un câble différent, ce qui permettrait de fournir à chacun le canal qu'il désire. Cependant, outre que le boîtier 82 serait plus coûteux, cela impliquerait également l'installation d'un deuxième câble pour un deuxième utilisateur, allant du boîtier 82 vers le lieu d'utilisation, avec des perçages de cloisons et d'autres dégradations possibles.

## Revendications

1. Dispositif de tête pour un système de distribution de signaux de télévision desservant une pluralité d'installations d'usager, destiné à alimenter au moins deux câbles de descente et comportant :
- un ensemble de plusieurs sources distinctes de signaux de télévision transmis par satellite, dites sources satellite, chacun des câbles de descente étant alimenté avec des signaux différents en provenance de sources satellites,
- une source de signaux de télévision transmis par voie terrestre, dite source terrestre,
- des coupleurs, dits coupleurs de signaux terrestres, pour répéter les signaux de la source terrestre sur chacun des câbles de descente en les ajoutant aux signaux d'une source satellite,
caractérisé en ce qu'il comporte au moins un convertisseur-abaisseur pour sélectionner, à partir d'une source satellite, un signal transportant des données numériques, pour abaisser sa fréquence et l'amener dans la gamme des fréquences des signaux transmis par la source terrestre, et au moins un coupleur, dit coupleur de signaux numériques, pour introduire le signal à fréquence abaissée parmi ceux venant de la source terrestre.

2. Dispositif de tête selon la revendication 1, caractérisé en ce que le coupleur de signaux numériques est monté en amont des coupleurs de signaux terrestres sur une connexion venant de la source terrestre.

3. Dispositif de branchement d'usager, destiné à fournir des signaux à une installation d'usager à partir d'un dispositif de distribution de signaux de télévision selon la revendication 1, muni de moyens de sélection pour sélectionner un des câbles de descente et y relier l'installation, caractérisé en ce qu'il comporte au moins un convertisseur-élévateur pour relever la fréquence des signaux à fréquence abaissée transportant des données numériques et amener leur fréquence dans la gamme des fréquences des signaux transmis par satellite.

4. Dispositif de branchement d'usager selon la revendication 3, caractérisé en ce qu'il comporte un répartiteur pour fournir les signaux venant du câble sélectionné à au moins deux installations d'usager distinctes.
